## Europäisches Patentamt

## European Patent Office

## Office européen des brevets

(19)

(11) Publication number: **0 014 200**
**B1**

(12) **EUROPEAN PATENT SPECIFICATION**

(45) Date of publication of patent specification: **25.11.81**

(21) Application number: **79900323.1**

(22) Date of filing: **02.04.79**

(86) International application number:
**PCT/GB79/00057**

(87) International publication number:
**WO 79/00889 01.11.79 Gazette 79/22**

(51) Int. Cl.³: **B 01 D 47/02 //E21F5/02, B60H3/06**

(54) .Air cleaners.

(30) Priority: **06.04.78 GB 1344078**

(43) Date of publication of application:
**20.08.80 Bulletin 80/17**

(45) Publication of the grant of the European patent:
**25.11.81 Bulletin 81/47**

(84) Designated Contracting States:
**DE FR GB**

(56) References cited:
**BE - A - 523 204
DE - A - 2 224 844
FR - A - 2 119 695
SU - A - 175 811**

(73) Proprietor: THORNE, John
Kingswood House, Main Street Woodhouse Eaves
Loughborough, Leicestershire (GB)

(72) Inventor: THORNE, John
Kingswood House, Main Street Woodhouse Eaves
Loughborough, Leicestershire (GB)

(74) Representative: SERJEANTS
25, The Crescent
Leicester, LE1 6RX (GB)

Courier Press, Leamington Spa, England.

Air cleaners

The invention relates to air cleaners, wet dust-extraction units, or self-induced spray scrubbers.

*Background Art*
The invention is an improvement on the air cleaners described in GB—A—1,037,789. The air cleaners described in that earlier Patent Specification work very well provided that the water level is maintained, and the apparatus is level. Otherwise, air escapes cleaning or has to be forced through an unnecessary amount of water. These limitations limit usefulness in vehicles, ships, mines and tunnels.

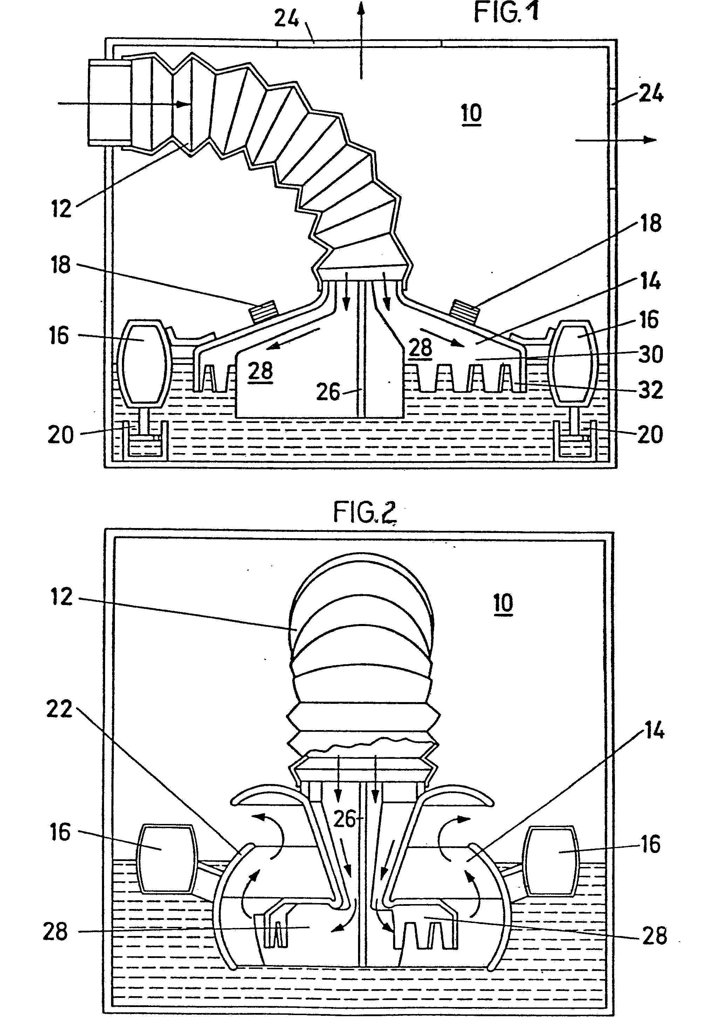

BE—A—523,204 is directed to the solution of the same problem, and describes two separators for the purpose: Figures 1 to 4 in which there is a cross-piece 17 or gimbel; and Figures 5 and 6 in which floats 13 keep the outlet of the tube 5 at the level of the cleaning liquid. In Figure 4, guide plates 6 are provided for the input currents of air. There are no such guide plates in Figures 5 and 6, and they would be difficult to fit because of the elastic part 14 of the inlet tube 5. In both embodiments, air is blown and not drawn through the separator. This puts the apparatus at a higher pressure than its surroundings, and causes dirty air to be blown out through any gap.

SU—A—175,811 describes a wet-type dust trap in which a telescopic inlet pipe 3 has a float for maintaining a constant gap between the end of the inlet pipe and the water. A telescopic pipe would be impractical in an air cleaner because it would soon become blocked with dirt, and the dust trap includes no means for taking account of the dust trap itself not being level.

*Disclosure of Invention*
An air cleaner according to the invention comprises a tank for cleaning liquid, a feed tube for air, an outlet at the end of the feed tube, and means for drawing air through the cleaner, wherein the feed tube is extensible and flexible, means are provided for floating the outlet at the level of the cleaning liquid in use, and the space under the outlet is divided by sheets extending transversely and below the said level into separate chambers, or two or more extensible feed tubes connected together are provided for stabilizing the outlet over the liquid. This makes it possible for the cleaner to be used with various levels of cleaning liquid and when the cleaner itself is not level.

In use, the liquid surface tends to be depressed by the feed air forming a supporting cushion, and there is some turbulence, but the outlet can be maintained substantially at the level of the liquid surface. The pressure of feed air tends to lift the outlet out of the water, so the outlet should be made reasonably heavy.

The outlet may be provided with floats, guides with reference to the inside of the tank, dampers to mitigate buffetting by the motion of the cleaning liquid, and/or baffles to reduce carry over of liquid out of the tank. These may be attached to the outlet, to the inside of the tank, or independent.

The outlet preferably has a low aspect ratio in plan, that is to say it is preferably rounded or circular rather than long and thin. The space under the outlet is divided into separate chambers in such a way that a change in pressure in one chamber (due for instances to tilting of the outlet) has minimal effect upon the pressure in the other chambers. A similar effect can be achieved by providing two or more extensible feed tubes, possibly connected together or independent. The outlet may be provided around the edge with a skirt for depending into the liquid, and the skirt is preferably provided with an indented edge. Each of these modifications tends to reduce the pressure under the outlet if part of the edge of the outlet should rise relative to the surface of the cleaning liquid, and this induces a righting moment to stabilize the outlet over the liquid.

*Brief Description of Drawings*
Figure 1 is a vertical section through an air cleaner according to the invention;
Figure 2 is a vertical section perpendicular to that of Figure 1 and including a modified outlet;
Figure 3 is a vertical section through a modified air cleaner according to the invention; and
Figure 4 is an isometric view of a further modified outlet of the feed tube.

*Best Mode of Carrying Out the Invention*
In Figures 1 and 2 the cleaner comprises a chamber 10 having a tank of cleaning liquid as its lower part. An extensible feed tube 12 for air enters at one side of the chamber, and ends with an outlet 14. The outlet 14 is provided with floats 16, weights 18, hydraulic dampers 20 which also function as guides for the outlet in the tank, and baffles 22. Alternative air outlets 24 from the chamber to fan are provided.

The space under the outlet 14 is divided by sheets 26 into separate chambers 28. The outlet 14 is provided around the edge with a skirt 30 indented with "dogs teeth" 32.

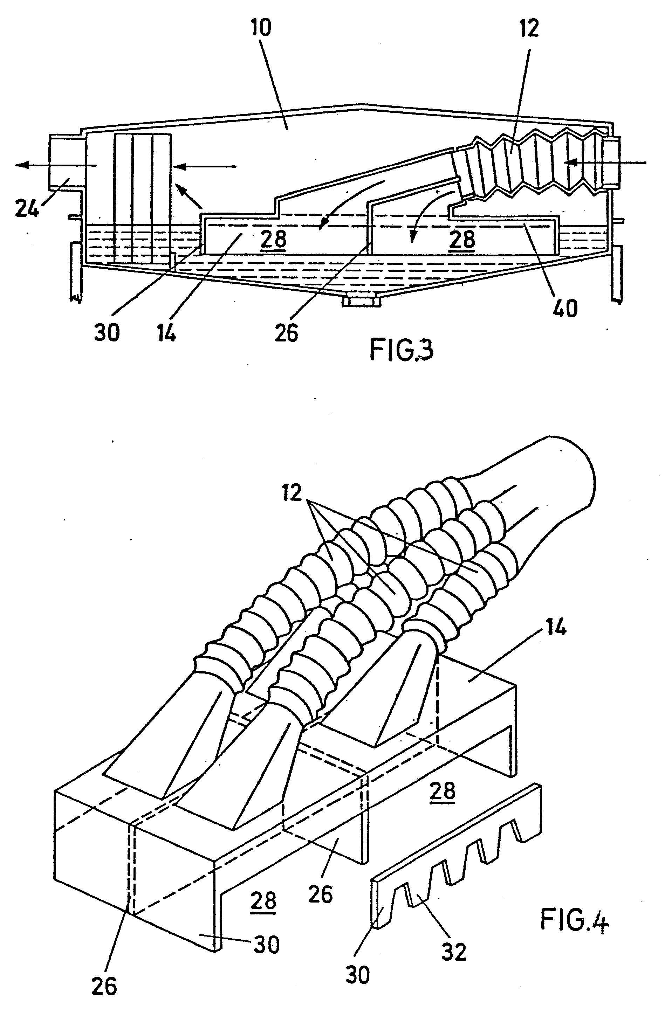

In Figures 3 and 4 the same reference numerals have been used to indicate corresponding parts. In Figure 4, the feed tube 12 is quadrupled, and each branch leads to a separate chamber 28 divided off from the others by sheets 26 and surrounded by a skirt 30. The outlet 14 is box shaped.

*Industrial Applicability*
An air cleaner according to the invention can be used for removing dust from the atmosphere, for example at the coal face. Air is drawn through by a fan (not shown) at the outlet, and leaves the entrained dust in the liquid. On installation and prior to use, the air cleaner is preferably levelled so as to keep the inclination of the outlet in operation to a minimum.

## Claims

1. An air cleaner comprising a tank for cleaning liquid, a feed tube (12) for air, an outlet (14) at the end of the feed tube (12) and means for drawing air through the cleaner characterised in that the feed tube is extensible and flexible, that means are provided for floating the outlet (14) at the level of the cleaning liquid in use, and that the space under the outlet (14) is divided by sheets extending transversely and below the said level into separate chambers (28) or two or more extensible feed tubes connected together are provided for stabilizing the outlet over the liquid.

2. An air cleaner according to claim 1 in which the outlet is provided around the edge with a skirt (30) having an indented edge.

## Revendications

1. Un épurateur d'air englobant un réservoir pour nettoyer liquide, un tube d'alimentation (12) pour l'air, un débit (14) au bout du tube d'alimentation (12) et des moyens pour aspirer l'air par l'épurateur caractérisé par le tube d'alimentation qui est extensible ou qui est flexible, que des moyens sont fournis pour flotter le débit (14) au niveau du nettoyeur liquide qui est utilisé et que l'espace sous le débit (14) est divisé par des plaques qui sont prolongés transversalement et sous le liquide de ci-dessus en chambres séparées (28) ou deux ou plus tubes d'alimentation extensibles raccordés ensemble sont fournis pour stabiliser le débit pardessus le liquide.

2. Un épurateur d'air conformement avec revendication 1 dans lequel le bout du débit à une jupe découpée (30) autour de son bord.

## Patentansprüche

1. Ein Luftreiniger mit einem Tank für die Reinigungsflüssigkeit, einem Zuführrohr (12) für die Luft, einem Auslaß (14) an Ende des Zuführrohres (12) und Mitteln, mit denen die Luft durch den Reiniger gezogen wird, dadurch gekennzeichnet, daß das Zuführrohr dehnbar bzw. biegbar ist, daß Mittel vorgesehen sind, damit der Auslaß (14) auf der Oberfläche der verwendeten Reinigungsflüssigkeit schwimmt, und daß der Raum unterhalb des Auslasses (14) durch querverlaufende dünne Platten in zwei getrennte Kammern (18) unter der besagten Oberfläche eingeteilt ist, oder daß zwei oder mehr dehnbare miteinander verbundene Zuführrohre zur Stabilisierung des Auslasses über der Flüssigkeit vorgesehen sind.

2. Luftreiniger gemäß Anspruch 1, bei dem der Auslaß an seinem Rand mit einem am Ende ausgezackten Schoß (30) versehen ist.

0 014 200

FIG.1

FIG.2

10    12

24

30    14    26

**FIG.3**

40

12

14

28

28

26

28

30

26

30    32

**FIG.4**